Europäisches Patentamt

European Patent Office

Office européen des brevets

(11) Publication number: **0 267 053 B1**

## EUROPEAN PATENT SPECIFICATION

(45) Date of publication of patent specification: **07.10.92**

(51) Int. Cl.5: **C08G 63/00**, C08G 59/02, C08L 67/06, C08G 18/62, C08G 18/69

(21) Application number: **87309872.7**

(22) Date of filing: **06.11.87**

The file contains technical information submitted after the application was filed and not included in this specification

(54) **Additives for synthetic resins.**

(30) Priority: **07.11.86 JP 266435/86**

(43) Date of publication of application:
**11.05.88 Bulletin 88/19**

(45) Publication of the grant of the patent:
**07.10.92 Bulletin 92/41**

(84) Designated Contracting States:
**DE FR GB IT SE**

(56) References cited:
**EP-A- 0 136 572**
**EP-A- 0 234 902**
**FR-A- 2 383 208**
**US-A- 4 287 313**

(73) Proprietor: **Takemoto Yushi Kabushiki Kaisha
2-5, Minato-machi
Gamagouri-shi Aichi-ken(JP)**

(72) Inventor: **Kinoshita, Mitsuo
5-8, Nishikata Agehama Mito-cho
Hoi-gun Aichi-ken(JP)**
Inventor: **Imamura, Shigeru
4-68-12 Mori
Toyakawa-shi Aichi-ken(JP)**
Inventor: **Matsueda, Hirokazu
4-3-8 Nishiodakano
Toyohashi-shi Aichi-ken(JP)**

(74) Representative: **Clifford, Frederick Alan et al
MARKS & CLERK 57/60 Lincoln's Inn Fields
London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 267 053 B1

**Description**

This invention relates to additives for synthetic resins and more particularly to additives for thermosetting or thermoplastic synthetic resins containing [liquid rubber]/[polyester] block copolymers (hereinafter referred to as PD-PES block copolymers).

Many kinds of thermosetting and thermoplastic synthetic resins are widely used as domestic building materials such as for bathtubs and purification tanks.They are also used as industrial materials such as for machines and in electrical products. They also find utility as materials for fabrication of vehicles such as automobiles and railroad wagons and are further used to make storage tanks and containers.

It is a common practice to incorporate other types of synthetic resins, fillers, fiber-reinforcing materials etc. to improve their physical characteristics such as mechanical strength.

It is also particularly important to improve impact strength when the products are used for construction purposes. For this reason, it has been known to blend rubber materials and other polymers with many kinds of reinforcing materials, depending on the purpose for which the material will be used.

It has also been known to blend rubber materials and other thermoplastic synthetic resins into unsaturated polyesters (thermosetting synthetic resins, the volumes of which otherwise become reduced by 7-10% at the time of moulding) such that external appearance and accuracy of measurement of their molded product are maintained by this addition.

Well Known rubber materials which can be used for improving impact strength and reducing mold shrinkage as mentioned above are polybutadienes, butadiene-styrene copolymers, butadiene-acrylonitrile copolymers, butadiene-styrene-acrylonitrile copolymers and modified polybutadienes.

Those synthetic resins which are mostly used for reinforced plastics with improved impact strengths are commonly referred to as matrix resins, examples of which are thermosetting unsaturated polyester resins and thermoplastic resins such as polyethylene terephthalate, polybutylene terephthalate, polycarbonate, polyamide, etc. Reinforced plastics are produced by adding a rubber-type substance, a reinforcing material, a pigment, a filler, etc to these matrix resins and applying many kinds of molding processes.

Since matrix resins and rubber materials are so different from each other in physical characteristics such as polarity and solubility parameters, it is extremely difficult to mix them together uniformly or disperse them stably. Molded products obtained from an unstably mixed synthetic resin formulation suffer from imperfect surface conditions. Indentations and protrusions are observable and rubber material may appear on the surface. The desired mechanical strength is not achieved and shrinkage is not reduced. If use is made of an unstably dispersed thermoplastic synthetic resin compound, furthermore, one of the components may coagulate at the time of molding. This affects the molding characteristics adversely and increases the fluctuations in the physical characteristics of molded products.

For the reason stated above, it is therefore desirable to develop additives which mix uniformly with unstably dispersed thermosetting or thermoplastic matrix resins. The mixtures must have good molding characteristics so that products with superior surface qualities can be manufactured, so that the mechanical strength of the molded products is improved and so that mold shrinkage is reduced.

The present invention relates to additives for synthetic resins which will satisfy these requirements.

Many ideas have been advanced for improving compatibility and/or dispersibility of additives with theremosetting or thermoplastic synthetic resins.

Graft polymerization of a rubber material with another monomer such as styrene maleic acid, methacrylates, acrylates etc. have been considered (for example an Japanese Patent Publication Tokkai 54-18862 and 54-40846). The graft efficiency is not high and the compatibility and dispersibility of the products is however not always high enough.

For improving compatibility with thermosetting synthetic resins, styrene-type block copolymers have been considered (Japanese Patent Publications Tokkai 53-74592 and 60-99158). Although in this way compatibility can be improved to a certain extent the products do not help against shrinkage, or increase impact strength since use is made of styrene-type polymers which basically lack strength.

Rubber modification of unsaturated polyester has also been considered, such as the Diels-Alder addition of conjugate diene-products (such as dicyclopentadiene) to the double bonds of an unsaturated polyester containing $\alpha,\beta$ unsaturated dicarboxylic acids (Japanese Patent Publication Tokkai 58-2315). Although improved compatibility with unsaturated polyester resins is achieved, the small amounts of conjugate diene-products added are not effective to reduce shrinkage and increase impact strength.

EP-A-2 349 02 discloses block copolymers containing liquid rubber/polyester blocks. The polyester segments are obtained by ring-opening polymerization of an $\epsilon$-aliphatic lactone, utilising the hydroxy groups of the liquid rubber.

US-A-4 287 313 and FR-A-2 383 208 disclose block copolymers of rubber and polyester. The polyester

2

segments are made by ring-opening polymerization of ε-caprolactone upon rubber which is hydroxyl terminated.

The present invention sets out to provide additives for synthetic resins which have a more uniform and stable compatibility.

The present invention is based on the realization that the desired conditions are satisfied by block copolymers with constituent components including a polyester component as obtained by ring-opening polymerization of an ε-aliphatic lactone, the ends of which are modified by reactive groups, and a liquid rubber compound component.

The present invention consists in an additive for synthetic resins, said additive containing a [liquid rubber]/[polyester] block copolymer comprising as constituent segments thereof (a) polyester segments as obtained by ring-opening polymerization of an ε-aliphatic lactone and (b) liquid rubber compound segments, one or more of said polyester segments being connected to liquid rubber compound segments by an ester bond, at least one of said polyester segments having a reactive group at an end thereof selected from vinyl groups and epoxy groups, and the polyester segments and the reactive group or groups comprising 10-60 weight % of said block copolymer.

The block copolymers of the present invention can be obtained reliably in an industrially advantageous manner by catalysed ring-opening polymerization of ε-aliphatic lactone upon a liquid rubber compound having a hydroxyl group within its molecule. Polyester chains are formed via the hydroxyl groups of the liquid rubber compound. The reactive groups can thereafter be incorporated by reaction as necessary with the hydroxyl groups at the end of these polyester chains.

The block copolymers of the present invention include in their constituent segments both polyester segments as obtainable by ring-opening polymerization of ε-aliphatic lactone and liquid rubber compound segments. Also, at least one of the polyester segments has a reactive group at its end. The invention is not however limited to details of any method of producing these block copolymers, or to details of their structure. For example, the hydroxyl group in the liquid rubber may be in the chain part of this compound or at an end. It may also be connected to the chain directly or indirectly through any group of atoms. The present invention is also not limited with respect to stereoisomerism or structural isomerism of the liquid rubber due to any difference in the polymerization method such as radical polymerization, ionic polymerization and living polymerization.

Monomer diene compounds which give liquid rubber compounds include butadiene, isoprene, chloroprene and 1,3-pentadiene. Examples of liquid rubber compounds which may used advantageously for the purpose of the present invention include α,ω-1,2-polybutadiene glycol (Nisso PB-G series produced by Nippon Soda Inc). hydrogenated α ω-1, 2-polybutadiene glycol (Nisso PB-GI series produced by Nippon Soda Inc), end hydroxyl modified 1,4-polybutadiene (Poly-bd R-45M or R-45HT produced by Idemitsu Sekiyu Kagaku Inc. or Arco Chemical Inc.), and hydroxy modified polyisoprene (Kuraprene KL-51 or KL-52 both with molecular weight of 25,000 and produced by Kurare Isoprene Chemical Company). As well as the liquid rubber compounds described to a hydrocarbon chain, use may also be made of those obtained by hydroxyalkylesterification whereby alkylene oxide is added to the carboxyl group of a carboxyl-modified liquid rubber compound or to those groups obtained by a ring-opening reaction of an epoxy group of an epoxy-modified liquid rubber compound with water, alcohol or monohydric organic acid.

ε-Caprolactone may be considered as a representative example of ε-aliphatic lactones.

Catalysts useful for ring-opening polymerization of ε-aliphatic lactone upon the hydroxyl groups include anion polymerization catalysts, coordination anion polymerization catalysts, coordination anion polymerisation catalysts, cation polymerization catalysts, etc, as disclosed, for example, in Lectures on Polymerization Reactions, Vol. 7 Ring-Opening Polymerization (II) (published by Kagaku Dojin) at page 108. In particular, titanium catalysts such as tetrabutyl titanate, tetrapropyl titanate and tetraethyl titanate and tin catalysts such as dibutyl tin oxide, tin octylate and stannous chloride are favourable.

Reactive groups may be introduced by reacting various reactants with the end hydroxyl groups of the polyester segments, for example as follows.

Vinyl groups can be introduced by acylation through reaction of ethylenic unsaturated halides such as acrylic acid halides and methacrylic acid halides, or by a ring-opening addition reaction of an epoxy group using a substance containing within its molecule both an ethylenic unsaturated hydrocarbon group and an epoxy group. e.g. allylglycidyl ether and glycidyl methacrylate.

Epoxy groups can be introduced by ring-opening addition of an epoxy alkyl halide such as epichlorohydrin to an end hydroxy group in the presence of an acid or alkaline catalyst, or alternatively by a ring-closing reaction accompanied by dehydrohalogenation in an alkaline environment.

The examples given above are of course not intended to be limitative of the broad scope of the present invention.

The present invention sets out to use block copolymers with liquid rubber compounds connected with polyester chain segments, so that compatibility and dispersibility of liquid rubber compounds with matrix resins can be improved while their original characteristics are maintained. The reactive end modifications of polyester chains as described above also provide that the physical characteristics of molded products can be improved by forming chemical bonds with matrix resins, or possibly with various fillers and cross-linking agents.

The block copolymers of this invention have good characteristics as additives for improving the impact strength of molded products using thermosetting resins and various thermoplastic resins as matrix resin, and/or in reducing their molding shrinkage. The block copolymers of the present invention have more uniform and stable compatibility or dispersibility with matrix resins than the rubber-like substances and thermoplastic resins which have been used conventionally for similar purposes, and further form chemical bonds with matrix resins as well as various fillers and cross-linking agents. Block copolymers having desired characteristics can be obtained by varying the molecular weights, structures and compositions of the liquid rubber compound and polyester segments, as well as the ratios between the molecular weights. Compatibility and dispersibility with matrix resins can be improved generally by controlling the molecular weight of the polyester segment, the content of the polyester segments inclusive of end reactive groups in a block copolymer is adjusted to 10-60 weight %. If the polyester part inclusive of end reactive groups is less than 5 weight %, dispersibility with matrix resins is poor.

These block copolymers of the invention can also be used extremely well as a reliable dispersant for other types of thermoplastic resin not compatible with matrix resins.

The present invention includes within its scope mixtures of block copolymers with appropriate amounts of elastomers or prepolymers, e.g. thermoplastic resins, and if desired further components such as monomers with vinyl polymerisation characteristics, organic solvents, plasticisers, organic or inorganic bulk-increasing materials, fiber reinforcing materials, etc. When block copolymers are applied to the thermosetting unsaturated polyester resins, in particular, it is extremely convenient if they are diluted appropriately with a monomer with vinyl polymerisation characteristics such as styrene, methylstyrene, methylmethacrylate, etc.

Examples of block copolymers and their evaluations are presented below so as describe the present invention in more detail.

EXAMPLES

Examples of Production No. 1 (Synthesis of hydrogenated polybutadiene-polycaprolactone adduct)

Placed inside a reactor were 700g (0.5 moles) of hydrogenated $\alpha.\omega$-1,2-polybutadiene glycol (Nisso PB-GI1000 with average molecular weight of 1400, produced by Nippon Soda, Inc), 0.7g of tetrabutyl titanate as catalyst and 300g (2.63 moles) of $\epsilon$-caprolactone for a reaction at 150°C for 3 hours in a nitrogen gas atmosphere to attain 997g of a yellowish, transparent, viscous liquid product.

The molecular weight of the hydrogenated polybutadiene-polycaprolactone adduct thus obtained was 2000 (hereinafter molecular weights are calculated values), the acid value was 0.3 and its hydroxyl value was 54.6.

Example of Production No. 3 (Additive F)

Placed inside a flask were 800g (0.4 moles) of the adduct obtained in Example of Production No. 1, 4g of boron trifluoride ether complex as catalyst and 1g of hydroquinone as polymerization inhibitor, and 130.6g (0.92 moles, or 15% in excess of calculated value) of glycidyl methacrylate were gradually dropped for reaction at 50-60°C. After the dropping was completed, the reaction was continued for 2 hours at 70-80°C and a block copolymer with methacryloxy groups at an end was obtained.

The molecular weight of the block copolymer thus obtained was 2284 and the content of polyester part inclusive of reactive groups was 38.7 weight %.

Example of Production No. 5 (Additive H)

Placed inside a flask were 800g of (0.4 moles) of the adduct obtained in Example of Production No. 1, 2g of tin tetrachloride as catalyst and 400ml of toluene, and 81.4g (0.88 moles) of epichlorohydrin were gradually dropped at 90-100°C for reaction. After the dropping was completed. the reaction was continued for 2 hours at the same temperature. After the reaction, 370ml of toluene were distilled away. Next, the

4

reaction product was moved into a shaking reactor and after 1000ml of methanol solution containing 100g of sodium methylate were added thereto, a reaction was continued at room temperature with severe shaking. After the mixture was left quietly, the separated methanol layer was removed. Water was added for cleaning with shaking several times to remove sodium methylate which was used in excess until it was ascertained that the cleaning water became nearly neutral. Water was then removed under reduced pressure to obtain 851g of a product.

The product thus obtained is an end epoxy modified block copolymer and the content of oxiran oxygen was 3.9% (calculated value = 3.79%) and the content of polyester part inclusive of reactive groups was 34.3

Evaluation No. 1

Placed in a beaker were 60 weight parts of a styrene solution of unsaturated polyester resin containing 60% of solid component (Polyester 9107 produced by Hitachi Kasei, Inc: phthalic ester type), 27 weight parts of styrene monomer and 13 weight parts of an additive listed in Table I. After the mixture was made uniform and stirred by a propeller stirrer for five minutes, it was moved into a 100ml measuring cylinder and its phase separation (volume %) was measured over a period of time while it was left quiet at room temperature. The results are shown in Table 2.

TABLE 2

| Additive | Condition Immediately After Resting Quietly | After 1 Hour | After 6 Hours | After 24 Hours |
|---|---|---|---|---|
| HPBG | Separation into two layers | 12 | 13 | 13 |
| SBS | white turbed dispersion - partial separation | 12 | 13 | 14 |
| PCL | nearly soluble minute dispersion | 0 | 0 | 0 |
| (Notes) HPBG: hydrogenated $\alpha$, $\omega$-1, 2-polybutadiene glycol (Nisso PB-GI 1000 produced by Nippon Soda, Inc.) SBS: styrene-butadiene-styrene block copolymer (Califlex TR1102 produced by Shell Chemical, Inc.) PCL: Polycaprolactone (Placcel 220 produced by Dycel, Inc.) | | | | |

Evaluation No. 4

Added to 500 weight parts of 33% styrene solution of the block copolymer of F described in Example of Production No. 3 were 500 weight parts of Polylite PC-670 (produced by Dai-Nippon Ink, Inc.) as thermosetting unsaturated polyester resin, and 60 weight parts of cobalt naphthenate were dissolved to obtain a liquid with viscosity 820 centipoise. This liquid was pumped into a mold (commonly) referred to as RIM or RTM) provided with a glass mat for injection molding while acetylacetone peroxide was mixed to it at the rate of 1%. The diameter of the inlet of this mold was 20mm and the mold temperature was 25°C at the time of the injection. Two hours later, the mold temperature began to rise by the heat of polymerization and a maximum temperature of 70°C was reached still three hours later. The mold was opened still three hours later and the molded product was taken out. The external apperance of this product was uniform and there were no irregularities in luster. Its surface was smoother than that of a comparison product obtained in an identical manner as described above except the block copolymer was not used. Glass fibers were hardly observable.

It is clear from the examples and evaluation given above that the present invention can improve physical characteristics of molded products such as compatibility, dispersibility and molding workability as well as surface charactertistics and molding shrinkage.

**Claims**

1. An additive for synthetic resins, said additive containing a [liquid rubber]/[polyester] block copolymer comprising as constituent segments thereof (a) polyester segments as obtained by ring-opening polymerization of an $\epsilon$-aliphatic lactone and (b) liquid rubber compound segments, one or more of said polyester segments being connected to liquid rubber compound segments by an ester bond, at least

EP 0 267 053 B1

one of said polyester segments having a reactive group at an end thereof selected from vinyl groups and epoxy groups, and the polyester segments and the reactive group or groups comprising 10-60 weight % of said block copolymer.

2. The additive as claimed in claim 1 characterised in that said rubber compound segments comprise a polybutadiene compound or a partially or completely hydrogenated polybutadiene compound.

3. The additive as claimed in claim 1 characterised in that said liquid rubber compound segments comprise a polyisoprene compound or a partially or completely hydrogenated polyisoprene compound.

4. The additive as claimed in claim 1, 2 or 3 characterised in that it is obtained by ring-opening polymerization in the presence of a catalyst of an $\epsilon$-aliphatic lactone upon a liquid rubber having a hydroxyl group in the molecule.

5. The additive as claimed in claim 4 characterised in that the $\epsilon$-aliphatic lactone is $\epsilon$-caprolactone.

**Patentansprüche**

1. Additiv für synthetische Harze, das einen [Flüssiggummi]/[Polyester] Block Copolymer enthält, der als seine konstituierenden Segmente aufweist (a) Polyestersegmente, wie sie durch ringöffnende Polymerisation von $\epsilon$-aliphatischem LaKton und (b) Flüssiggummimassen-Segmenten, wobei zumindestens eines dieser Polyestersegmente mit Flüssiggummimassen-Segmenten über eine Esterbindung verbunden ist, zumindestens eines dieser Polyestersegmente eine reaktive Gruppe an seinem Ende aufweist, die ausgewählt ist aus Vinyl- und Epoxy-Gruppen und die Polyestersegmente und die reaktive Gruppe oder die reaktiven Gruppen zumindest 10 bis 60 Gewichtsprozent des genannten Block Copolymers ausmachen.

2. Additiv nach Anspruch 1, dadurch gekennzeichnet, daß die genannten Gummimassensegmente eine Polybutadien-Verbindung oder eine teilweise oder vollständig hydrierte Polybutadien-Verbindung aufweisen.

3. Additiv nach Anspruch 1, dadurch gekennzeichnet, daß die genannten Flüssiggummimassen-Segmente eine Polyisopren-Verbindung oder eine teilweise oder vollständig hydrierte Polyisopren-Verbindung aufweisen.

4. Additiv nach den Ansprüchen 1, 2 oder 3, dadurch gekennzeichnet, daß es erhalten ist durch ringöffnende Polymerisation in der Anwesenheit eines Katalysators von $\epsilon$-aliphatischem Lakton auf Flüssiggummi mit einer Hydroxal-Gruppe im Molekül.

5. Additiv nach Anspruch 4, dadurch gekennzeichnet, daß das $\epsilon$-aliphatische Lacton $\epsilon$-Kaprolakton ist.

**Revendications**

1. Additif pour résines synthétiques, ledit additif contenant un copolymère en masse [caoutchouc liquide]/-[polyester] comprenant comme segments constituants dudit additif (a) des segments polyesters obtenus par polymérisation avec ouverture de cycle d'une lactone $\epsilon$-aliphatique et (b) des segments de composé de caoutchouc liquide, un ou plusieurs desdits segments polyesters étant reliés aux segments de composé de caoutchouc liquide par une liaison ester, au moins un desdits segments polyesters ayant un groupement réactif à l'une de ses extrémités choisi parmi les groupements vinyliques et les groupements époxy et les segments polyesters et le ou les groupements réactifs comprenant de 10 à 60 pour cent en poids dudit copolymère de masse.

2. Additif tel que revendiqué dans la revendication 1, caractérisé en ce que lesdits segments de composé de caoutchouc comprennent un composé polybutadiénique ou un composé polybutadiénique partiellement ou complètement hydrogéné.

3. Additif tel que revendiqué dans la revendication 1, caractérisé en ce que lesdits segments de composé de caoutchouc liquide comprennent un composé polyisoprénique ou un composé polyisoprénique

6

partiellement ou complètement hydrogéné.

4. Additif tel que revendiqué dans la revendication 1,2 ou 3 caractérisé en ce qu'il est obtenu par une polymérisation avec ouverture de cycle en présence d'un catalyseur d'une lactone $\epsilon$-aliphatique sur un caoutchouc liquide ayant, dans sa molécule, un groupement hydroxyle.

5. Additif tel que revendiqué dans la revendication 4, caractérisé en ce que la lactone $\epsilon$-aliphatique est la $\epsilon$-caprolactone.